# FASCICULE DE BREVET EUROPEEN

(11) **EP 1 329 344 B1**
(45) Date de publication et mention de la délivrance du brevet: **27.02.2008**
(21) Numéro de dépôt: 03290101.9
(22) Date de dépôt: 15.01.2003
(51) Int. Cl.: B60H 1/00, H01M 8/04

(54) **Dispositif de gestion thermique, notamment pour véhicule automobile équipé d'une pile à combustible**
Anordnung zur thermischen Verwaltung, insbesondere für ein Fahrzeug, das mit einer Brennstoffzelle ausgerüstet ist
Device for thermal management, especially for a vehicle equipped with a fuel cell

(30) Priorité: 16.01.2002 FR 0200495
(43) Date de publication de la demande: 23.07.2003
(73) Titulaire: RENAULT S.A.S., 92100 Boulogne Billancourt (FR)
(72) Inventeur: Samuel, Sébastien, 78000 Versailles (FR); Olivier, Gérard, 78380 Bougival (FR); Oulefki, Abdelhakim, 93000 Aubervilliers (FR)

(56) Documents cités:
- EP-A- 0 595 714
- FR-A- 2 766 261
- FR-A- 2 780 490

## Description

L'invention concerne un dispositif de gestion thermique d'une pluralité d'échangeurs thermiques, notamment pour un véhicule automobile équipé d'une pile à combustible, comportant
- un circuit primaire frigorigène dans lequel est amené à circuler un fluide frigorigène et dans lequel sont insérés en série au moins un compresseur, un condenseur, un détendeur, et un évaporateur,
- un circuit secondaire dans lequel est amené à circuler un fluide caloporteur et comportant
   a) des première, deuxième et troisième branches parallèles dans lesquelles sont insérés un premier parmi lesdits échangeurs, ledit condenseur et ledit évaporateur, respectivement,
   b) des moyens de connexion sélective de ladite première branche avec ladite deuxième branche ou ladite troisième branche,.
   c) des moyens de mise en circulation dudit fluide caloporteur,
   d) des moyens de commande dudit compresseur, desdits moyens de connexion sélective et desdits moyens de mise en circulation.

On connaît de la demande de brevet FR 0 111 603 déposée par la Demanderesse le 7 Septembre 2001 un dispositif de gestion thermique d'une pluralité d'échangeurs thermiques pouvant se présenter dans un véhicule automobile équipé d'une pile à combustible. Ces échangeurs sont en relation d'échange thermique avec des organes du véhicule devant être chauffés et/ou refroidis, par exemple, l'habitacle de véhicule, la pile à combustible, les batteries, le moteur électrique, ou un groupe de composants électroniques.

Le dispositif décrit dans la demande de brevet FR 0 111 603, comporte un circuit primaire frigorigène dans lequel sont insérés en série un compresseur, un condenseur, un détendeur et un évaporateur. Un fluide frigorigène, mis en circulation dans ce circuit primaire, libère de l'énergie calorifique lors de sa condensation dans le condenseur et de l'énergie frigorifique lors de son évaporation dans l'évaporateur.

Ce dispositif comporte également un circuit secondaire dans lequel circule un fluide caloporteur et dans lequel sont insérés des échangeurs, ledit condenseur et ledit évaporateur, ainsi que des moyens de mise en relation d'échange thermique, par l'intermédiaire du fluide caloporteur, des échangeurs avec sélectivement le condenseur ou l'évaporateur, de manière à ce que chacun des échangeurs puisse recevoir sélectivement de l'énergie calorifique ou frigorifique, respectivement.

Dans ce but, le circuit secondaire comporte des conduites secondaires équipées de vannes et reliant ou « branchant » chaque échangeur avec le condenseur et avec l'évaporateur. Selon la position de ces vannes, le fluide caloporteur traversant un échangeur peut provenir du condenseur ou de l'évaporateur.

Le circuit secondaire devient donc d'autant plus complexe que le nombre d'échangeurs est grand. La longueur des conduites de ce circuit augmente également. Le coût du dispositif augmente également en conséquence. La demande de brevet européen EP 0 595 714, qui est considérée comme l'état de la technique le plus proche, décrit également un tel dispositif.

Le but de la présente invention est de fournir un dispositif de gestion thermique présentant les avantages du dispositif selon la demande de brevet n° 0 111 603, ou suivant la demande de brevet européen EP 0 595 714, mais comportant une longueur de conduites secondaires inférieure à celle de ces derniers.

On atteint ce but au moyen d'un dispositif du type décrit en préambule remarquable en ce que ledit circuit primaire comporte en outre des moyens d'inversion du sens du circulation dudit fluide primaire dans lesdits condenseur et évaporateur, de manière à sélectivement condenser et évaporer, ou évaporer et condenser, ledit fluide primaire dans lesdits condenseur et évaporateur, respectivement.

Comme on le verra plus en détail par la suite, la sélection de la nature calorifique ou frigorifique de !'énergie reçue par ledit échangeur thermique peut ainsi résulter d'une inversion des rôles du condenseur et de l'évaporateur. L'échangeur ne doit donc plus nécessairement être relié au condenseur et à l'évaporateur. L'architecture du circuit secondaire en est simplifiée et la longueur de conduites réduite.

Selon d'autres caractéristiques de la présente invention,
- ledit circuit secondaire comporte au moins une quatrième branche parallèle aux dites première, deuxième et troisième branches et dans laquelle est inséré au moins un deuxième parmi lesdits échangeurs et des moyens de connexion de ladite quatrième branche avec l'une desdites deuxième et troisième branches quand ladite première branche est connectée avec l'autre desdites deuxième et troisième branches, de manière à constituer des premier et deuxième sous-circuits indépendants, et des moyens de mise en circulation dudit fluide caloporteur dans lesdits sous-circuits ;
- ledit circuit secondaire comporte au moins des cinquième et sixième branches, dans lesquelles sont insérés des troisième et quatrième parmi lesdits échangeurs, respectivement, ledit circuit secondaire comportant en outre
   - des moyens de connexion sélective de ladite cinquième branche avec l'une quelconque desdites deuxième et troisième branches, de manière à sélectivement insérer ledit troisième échangeur dans l'un desdits premier et deuxième sous-circuits,
   - des moyens de connexion sélective de ladite sixième branche avec l'une quelconque desdites deuxième et troisième branches, de manière à sélectivement insérer ledit quatrième échangeur dans l'un desdits premier et deuxième sous-circuits,
   - des moyens de connexion sélective de ladite cinquième branche avec ladite sixième branche, de manière à constituer un troisième sous-circuit indépendant desdits premier et deuxième sous-circuits, et
   - des moyens de mise en circulation dudit fluide caloporteur dans lesdits sous-circuits ;
- ledit circuit secondaire comporte des moyens de connexion destinés à relier simultanément ladite cinquième branche, ladite sixième branche, et au moins l'une desdites deuxième et troisième branches ;
- ledit circuit secondaire comporte au moins une septième branche de dérivation dudit quatrième échangeur et des moyens de réglage du débit dudit fluide caloporteur dans ladite branche de dérivation ;
- ledit circuit primaire comporte un deuxième évaporateur en relation d'échange thermique avec un habitacle dudit véhicule ;
- ledit deuxième évaporateur est branché en parallèle avec ledit premier évaporateur ;
- ledit deuxième évaporateur et au moins un parmi lesdits échangeurs dudit circuit secondaire, destinés au chauffage et à la climatisation dudit habitacle, sont insérés dans un système comportant une conduite d'amenée d'air audit deuxième évaporateur et audit échangeur, un premier volet disposé dans la trajectoire dudit air et dont la position détermine les fractions dudit air dirigées vers ledit deuxième évaporateur et vers ledit échangeur, et un deuxième volet disposé dans la trajectoire de l'air ayant traversé ledit échangeur et dont la position détermine les fractions dudit air évacuées vers l'extérieur et vers ledit habitacle ;
- un desdits échangeurs est un aérotherme traversé par de l'air destiné à circuler dans un habitacle dudit véhicule, ou un radiateur en relation d'échange thermique avec l'extérieur dudit véhicule, ou est en relation d'échange thermique avec ladite pile à combustible, ou est en relation d'échange thermique avec au moins une batterie dudit véhicule, ou est en relation d'échange thermique avec un groupe de composants électroniques dudit véhicule, ou est en relation d'échange thermique avec un déshumidificateur ;
- un système de stockage de froid est inséré dans ledit circuit secondaire, ledit circuit secondaire comportant en outre des moyens de dériver ledit fluide caloporteur dudit système de stockage de froid et des moyens de régulation du débit dudit fluide caloporteur dans ledit système de stockage de froid.

D'autres caractéristiques et avantages de la présente invention apparaîtront à la lecture de la description qui va suivre et à travers du dessin annexé dans lequel :
- les figures 1 à 4 représentent schématiquement le dispositif selon l'invention dans différents modes de fonctionnement, dans le mode de réalisation préféré de l'invention ;
- la figure 5 représente un détail du système du dispositif selon l'invention destiné notamment au chauffage et à la climatisation de l'habitacle du véhicule.

Deux organes sont dits « reliés » ou « branchés» entre eux s'il sont insérés dans un même circuit.

On appelle « connexion » entre deux organes la situation dans laquelle un fluide peut circuler entre ces deux organes.

Deux organes « reliés » ou « branchés » peuvent donc être connectés entre eux ou pas, par exemple selon la position ouverte ou fermée, respectivement, d'une vanne insérée dans une conduite reliant ces deux organes.

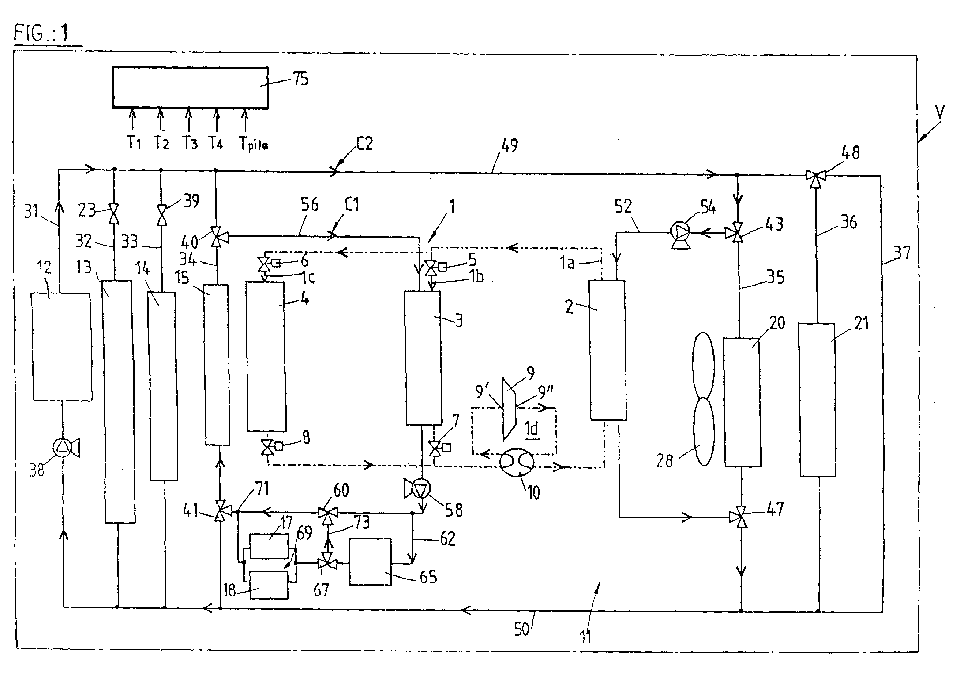

Le dispositif représenté sur les figures 1 à 4 comporte un circuit primaire ou circuit frigorigène 1, dans lequel est amené à circuler un fluide frigorigène et comportant trois branches parallèles 1a, 1b et 1 c et une boucle d'inversion 1d.

Dans les trois branches 1a, 1b et 1c, sont respectivement insérés un condenseur 2 et des premier et deuxième évaporateurs, 3 et 4 respectivement. Les évaporateurs 3 et 4 sont associés à des détendeurs 5 et 6, respectivement, et à des vannes 7 et 8, respectivement. Le deuxième évaporateur 4 est en relation d'échange thermique avec un habitacle du véhicule, non représenté, et est encore appelé « premier aérotherme ».

La boucle d'inversion 1d comporte un compresseur 9, dont l'entrée est référencée 9' et la sortie 9". Elle est reliée par l'intermédiaire d'une vanne à quatre voies 10, d'une part au condenseur 2, d'autre part aux vannes 7 et 8, de manière à permettre, selon la position de la vanne à quatre voies 10, la connexion sélective de l'entrée 9' et de la sortie 9" du compresseur 9 avec le condenseur 2 d'une part et les vannes 7 et 8 d'autre part, respectivement, ou avec les vannes 7 et 8 d'une part et le condenseur 2 d'autre part, respectivement.

Le condenseur 2 et l'évaporateur 3 sont également insérés dans un circuit secondaire 11 dans lequel est amené à circuler un fluide caloporteur, par exemple de l'eau distillée.

Dans le circuit secondaire 11 sont également insérés une pluralité d'échangeurs thermiques en relation thermique avec une pluralité d'organes d'un véhicule V, indiqué symboliquement, chaque couple échangeur-organe définissant une unité fonctionnelle.

Quand le fluide caloporteur est compatible avec un organe, il peut être en contact avec lui, l'échangeur et l'organe étant alors confondus. Au contraire, la relation d'échange thermique entre un organe et un échangeur peut être réalisée par l'intermédiaire d'un fluide caloporteur comme par exemple de l'air ou de l'huile.

Pour plus de clarté, seuls les échangeurs des différentes unités fonctionnelles du véhicule V ont été représentés.

Le circuit secondaire 1 comporte dix échangeurs 12 à 21.

L'échangeur 12 ou "échangeur de pile" est en relation d'échange thermique avec une pile à combustible pour amener et maintenir sa température dans une plage de fonctionnement optimal. Il est éventuellement confondu avec la pile elle-même.

L'échangeur 13, ou "régénérateur de déshumidificateur", est sélectivement en relation d'échange thermique avec un déshumidificateur d'air de manière à le régénérer, c'est-à-dire à évaporer l'eau que ce dernier a condensée, par exemple en déshumidifiant l'air destiné à être refroidi par le dispositif de climatisation de l'habitacle du véhicule V. L'échangeur 13 est associé à une vanne 23.

Les échangeurs 14 et 15, ou « deuxième et troisième aérothermes », sont en relation d'échange thermique avec l'habitacle du véhicule V. L'échangeur 14 est disposé de manière à être traversé par l'air extrait de l'habitacle.

Les échangeurs 17 et 18, montés parallèlement l'un à l'autre, sont en relation d'échange thermique avec une ou plusieurs batteries et avec un groupe de composants électroniques, respectivement.

Enfin les échangeurs 20 et 21, ou premier et deuxième radiateurs, respectivement, sont en relation d'échange thermique avec l'air extérieur.

De préférence, l'échangeur 20 est associé à un ventilateur 28.

Le ventilateur 28 peut être également associé à l'échangeur 21.

Le circuit secondaire 11 comporte sept branches parallèles 31 à 37.

Dans les six branches 31 à 36 sont insérés respectivement l'échangeur de pile 12 et une pompe 38, le régénérateur de déshumidificateur 13 et la vanne 23, l'échangeur 14 et une vanne 39, l'aérotherme 15 associé d'un côté à une vanne à trois voies 40, de l'autre à une vanne à trois voies 41, le premier radiateur 20 associé d'un côté à une vanne à trois voies 43, de l'autre à une vanne à trois voies 47, et le deuxième radiateur 21 associé à une vanne à trois voies 48.

La septième branche 37 est une branche de dérivation du deuxième radiateur 21. Elle est connectée à la vanne à trois voies 48.

Les branches 31 à 37 sont reliées entre elles par des première et deuxième branches communes, 49 et 50 respectivement, la branche commune 49 étant connectée à la vanne à trois voies 48.

Le circuit secondaire 11 comporte encore une branché 52, connectée d'une part à la vanne à trois voies 43, d'autre part à la vanne à trois voies 47, et dans laquelle sont insérés une pompe 54 et le condenseur 2, ainsi qu'une branche 56, connectée d'une part à la vanne à trois voies 40, d'autre part à la vanne à trois voies 41, et dans laquelle sont insérés l'évaporateur 3, une pompe 58 et une vanne à trois voies 60.

Une branche de dérivation 62 comportant en série un système de stockage de froid 65, par exemple un ballon permettant de stocker le fluide caloporteur refroidi lors de la traversée de l'évaporateur 3, une vanne à trois voies 67, et un ensemble 69 comportant les échangeurs 17 et 18 branchés en parallèle, est connectée d'une part à la sortie de la pompe 58, d'autre part en un point 71 de la branche 56 situé immédiatement en amont de la vanne à trois voies 41. Une branche 73 connecte entre elles les deux vannes à trois voies 60 et 67.

Le système de stockage de froid 65 peut également comprendre un ballon contenant un fluide susceptible de stocker de l'énergie frigorifique par changement de phase (par exemple de liquide à solide) lors de la traversée du fluide caloporteur refroidi dans l'évaporateur 3 et de déstocker cette énergie par changement de phase inverse lors de la traversée d'un fluide caloporteur plus chaud.

De préférence, les détendeurs 5 et 6 du circuit primaire et les vannes du circuit secondaire sont à débit réglable en continu, de manière que les quantités d'énergie calorifique ou frigorifique transférées par un échangeur soient réglables avec précision.

Le dispositif selon l'invention comporte enfin des moyens de commande, par exemple un calculateur 75 contrôlant et commandant le compresseur 9 et les différentes vannes et pompes, en fonction notamment de mesures des températures de la pile à combustible Tₚᵢₗₑ, et des températures T₁ à T₄ du régénérateur de déshumidificateur, de l'air de l'habitacle, des batteries, et du groupe de composants électroniques, respectivement, afin de fournir à leurs échangeurs respectifs une puissance thermique adaptée à leurs besoins.

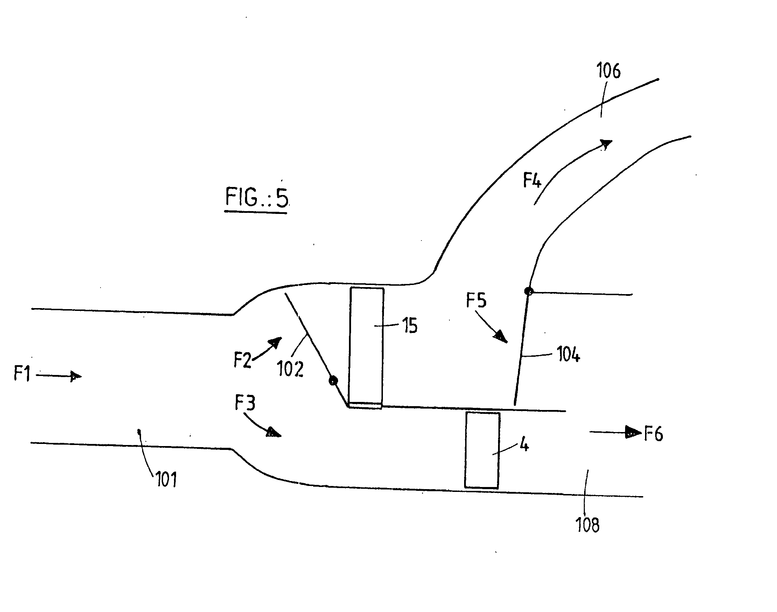

La figure 5 illustre un système destiné à optimiser l'efficacité de l'aérotherme 15 et de l'évaporateur 4.

Ce système comporte une conduite 101 d'amenée d'air provenant d'un mélange réglé d'air extérieur et d'air recyclé de l'habitacle, un premier volet 102, un deuxième volet 104, et des conduites 106 et 108 d'évacuation d'air vers l'extérieur et vers l'habitacle, respectivement.

L'air entre par la conduite 101 (flèche F1), est dirigé pour partie vers l'aérotherme 15 (flèche F2) et pour partie vers l'évaporateur 4 (flèche F3), selon la position du volet 102.

La position du deuxième volet 104 détermine les fractions de l'air ayant traversé l'aérotherme 15 évacuées vers l'extérieur (flèche F4) par la conduite 106 et vers l'habitacle (flèche F5) par la conduite 108.

L'air ayant traversé l'évaporateur 4 est évacué vers l'habitacle (flèche F6) par la conduite 108.

Avantageusement, ce système permet de transformer l'aérotherme 15 en élément de chauffage ou de climatisation de l'habitacle, ou en moyen d'évacuation d'énergie vers l'extérieur du véhicule V.

Les figures 1 à 4 illustrent le fonctionnement du dispositif dans quatre situations principales, respectivement le démarrage à froid en été, le fonctionnement stabilisé, c'est-à-dire en dehors de la phase de démarrage, en été, le démarrage à froid en hiver, et le fonctionnement stabilisé en hiver.

La situation "en été", respectivement "en hiver", se réfère à une situation nécessitant un refroidissement, respectivement un chauffage, de l'habitacle.

Le tableau 1 ci-dessous résume les positions des différents organes du dispositif selon l'invention dans les différentes situations.

**Tableau 1**

| Situation | | Démarrage à froid, été | | Stabilisé été | Démarrage à froid, hiver | Stabilisé hiver |
|---|---|---|---|---|---|---|
| | | Figure 1 | Tₚᵢₗₑ suffisante | Figure 2 | Figure 3 | Figure 4 |
| Vannes | 23 | F | F | O | - | - |
| | 39 | F | F | F | - | - |
| | 7 | O | O | F | O | - |
| | 8 | O | O | O | O | - |
| Vannes à trois voies | 40 | 15-56 | 15-56 | 15-56 | 15-56 | 15-56 |
| | 41 | 15-56 | 15-56 | 15-56 | 15-56 | 15-56 |
| | 43 | 49-52 | 20-52 | 20-52 | 20-52 | - |
| | 47 | 50-52 | 20-52 | 20-52 | 20-52 | - |
| | 48 | F | 37-49* | 21-49 | - | - |
| | 60 | 41-73 | 41-73 | 58-73 | 58-73 | - |
| | 67 | 60-65 | 60-65 | 69-73 | 69-73 | 69-73 |
| Vannes à quatre voies | 10 | 9'-7 et 8 9"-2 | 9'-7 et 8 9" - 2 | 9'-7 et 8 9" - 2 | 9"-7 et 8 9' - 2 | - |
| Compresseur | 9 | M | M | M | M | A |
| Pompes | 38 | M | M | M | A | A |
| | 54 | A | M | M | M | A |
| | 58 | M | M | M | M | M |

| | | | | | | |
|---|---|---|---|---|---|---|
| - : signifie que la position de l'organe peut être quelconque * : sous certaines conditions décrites ci-dessous O : Ouvert. F : Fermée (toutes les voies de la vanne sont fermées). xx-yy : met en connexion les organes repérés xx et yy A : A l'arrêt M : En marche | | | | | | |

Les flèches représentées sur les figures 1 à 4 indiquent les sens de circulation des fluides.

Le circuit primaire 1 peut fonctionner en climatiseur ou en pompe à chaleur, selon la position de la vanne à quatre voies 10.

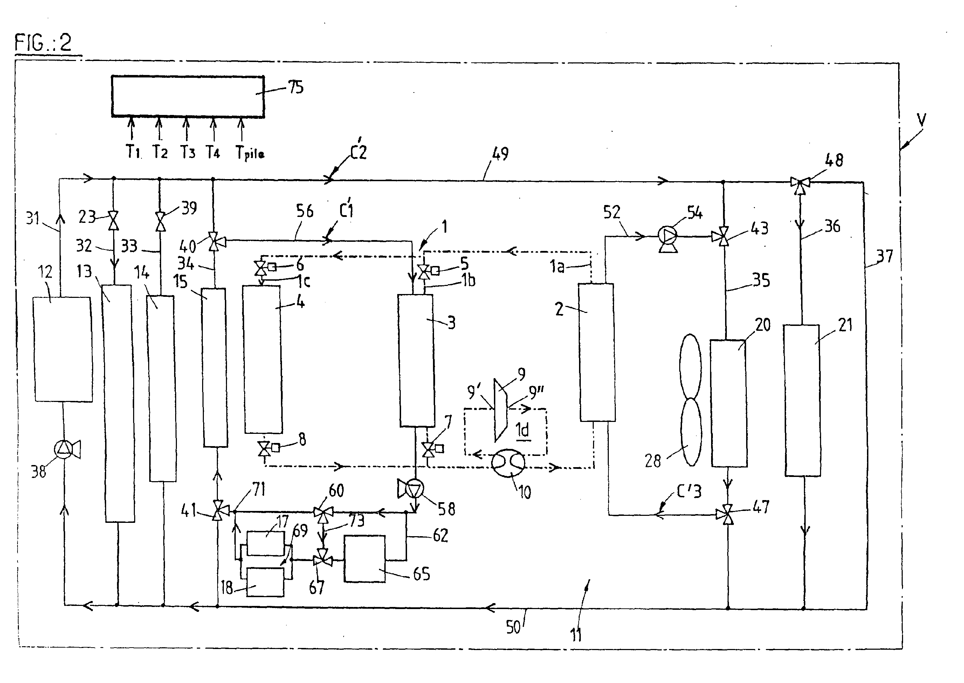

Dans la première position de la vanne à quatre voies 10 (figures 1 et 2), correspondant au fonctionnement en climatiseur, le fluide frigorigène comprimé par le compresseur 9 se condense, au moins en partie, dans le condenseur 2 en produisant de l'énergie calorifique, puis est détendu par au moins un des détendeurs 5 et 6 pour s'évaporer ensuite, au moins en partie, dans au moins un des évaporateurs 3 et 4, respectivement, en produisant de l'énergie frigorifique, avant de retourner, par l'intermédiaire de la vanne à quatre voies 10 en entrée 9' du compresseur 9.

Dans la deuxième position de la vanne à quatre voies 10, correspondant au fonctionnement en pompe à chaleur, le fluide frigorigène sortant du compresseur 9 se condense, au moins en partie, dans au moins un des évaporateurs 3 et 4, puis est détendu par au moins un des détendeurs 5 et 6, respectivement, pour s'évaporer ensuite, au moins en partie, dans le condenseur 2 avant de retourner, par l'intermédiaire de la vanne à quatre voies 10 en entrée 9' du compresseur 9.

Le changement de position de la vanne à quatre voies 10 permet ainsi d'inverser les fonctions du condenseur 2 et des évaporateurs 3 et 4.

Dans la situation de démarrage en été (figure 1), le circuit primaire fonctionne en climatiseur, de l'énergie frigorifique étant libérée dans les deux évaporateurs 3 et 4.

L'énergie frigorifique libérée dans l'évaporateur 4 est transférée, au moins en partie, directement à l'habitacle par circulation d'air autour de l'évaporateur 4, les volets 102 et 104 étant respectivement en position intermédiaire et de fermeture de la conduite 106.

L'énergie frigorifique libérée dans l'évaporateur 3 est transférée, au moins en partie, au fluide caloporteur mis en circulation par la pompe 58, puis à l'aérotherme 15 et, par circulation d'air autour de ce dernier, à l'habitacle du véhicule.

La présence de l'évaporateur 4 n'est pas indispensable à l'invention. Avantageusement, elle permet de disposer d'une deuxième source frigorifique pour refroidir l'habitacle.

Avantageusement, pour limiter la production d'énergie frigorifique par le circuit frigorigène, et donc la consommation énergétique du compresseur 9, les vannes à trois voies 60 et 67 sont positionnées de manière à permettre une circulation du fluide caloporteur à travers le système de stockage de froid 65. Ainsi l'énergie frigorifique, préalablement stockée dans le système 65 dans les situations de libération excédentaire d'énergie frigorifique par le circuit primaire, est transférée au fluide caloporteur.

La faible consommation énergétique du compresseur 9 permet avantageusement de réduire la puissance demandée à la pile à combustible dans une situation où sa température n'est pas optimale et où son rendement est mauvais.

Les vannes à trois voies 40 et 41 sont positionnées de manière que le fluide caloporteur circule en boucle dans un premier sous-circuit C1, traversant successivement l'évaporateur 3 , la pompe 58, éventuellement le système de stockage de froid 65 et la vanne à trois voies 67, les vannes à trois voies 60 et 41, l'aérotherme 15, et la vanne à trois voies 40.

Au démarrage, la pile à combustible doit être réchauffée pour atteindre une température de fonctionnement optimal, c'est-à-dire permettant un bon rendement énergétique.

Le fluide caloporteur, mis en circulation par la pompe 38, est réchauffé par des calories produites par la condensation du fluide frigorigène dans le condenseur 2 lors de la traversée de ce dernier. Ainsi réchauffé, il circule jusqu'à l'échangeur de pile 12 où il restitue de l'énergie calorifique à la pile, avant de retourner, par l'intermédiaire de la vanne 43 au condenseur 2. Le fluide caloporteur circule ainsi en boucle dans un deuxième sous-circuit C2 indépendant du premier, c'est-à-dire que le fluide caloporteur du deuxième sous-circuit C2 ne se mélange pas à celui circulant dans le premier sous-circuit C1.

Quand la température de la pile Tₚᵢₗₑ est satisfaisante (situation non représentée), par exemple parce qu'elle atteint environ 60°C, l'apport d'énergie calorifique à la pile par le fluide caloporteur doit cesser, mais la production d'énergie calorifique dans le condenseur 2 doit être maintenue pour permettre une libération d'énergie frigorifique dans les évaporateurs 3 et 4.

Les vannes à trois voies 43, 47 et 48 changent de position et la pompe 54 est mise en marche de manière que le fluide caloporteur ayant traversé le condenseur 2 circule en boucle, dans un sous-circuit de refroidissement du condenseur 2 indépendant du premier sous-circuit C1, à travers la pompe 54, la vanne à trois voies 43, le radiateur 20, et la vanne à trois voies 47. Les calories produites dans le condenseur 2 et transférée au fluide caloporteur sont ainsi évacuées vers l'extérieur, par l'intermédiaire du radiateur 20. Si nécessaire, le ventilateur 28 se met en marche.

Dans le cas où l'échangeur de pile 12 est incorporé dans la pile, la pompe 38 reste de préférence en marche et la vanne à trois voies 48 est positionnée de manière que le fluide caloporteur provenant de l'échangeur de pile 12 traverse la branche de dérivation 37 avant de retourner à l'échangeur de pile 12. La circulation du fluide caloporteur, dans un sous-circuit indépendant des sous-circuits C1 et de refroidissement du condenseur 2, n'a plus alors pour objectif de chauffer la pile, mais, avantageusement, d'homogénéiser sa température.

Dans la situation en fonctionnement stabilisé, en été (figure 2) l'habitacle, la pile, les composants électroniques et les batteries doivent être refroidis. Le tableau 1 indique les positions des différents organes du dispositif selon l'invention.

Le circuit primaire fonctionne en climatiseur de manière à libérer de l'énergie frigorifique par évaporation du fluide frigorigène dans l'évaporateur 4.

Le volet 102 est en position intermédiaire, de manière que l'habitacle puisse être refroidi par cette énergie frigorifique.

De préférence, la vanne 7 est fermée et l'évaporateur 3 est inactif, c'est-à-dire qu'il n'est le siège d'aucune libération de frigories par évaporation du fluide frigorigène.

Le fluide caloporteur du circuit secondaire circule dans trois sous-circuits indépendants.

Le premier de ces sous-circuits, C1', est destiné au refroidissement des batteries et des composants électroniques. Il comporte successivement l'ensemble 69 des échangeurs 17 et 18, la vanne à trois voies 41, l'aérotherme 15, la vanne à trois voies 40, l'évaporateur 3, la pompe 58 et la vanne à trois voies 60. Les calories transférées au fluide caloporteur par les échangeurs 17 et 18 sont évacuées vers l'extérieur par l'intermédiaire de l'aérotherme 15, les volets 102 et 104 étant respectivement en position intermédiaire et de fermeture de l'accès de l'air vers la conduite 108.

Avantageusement, l'aérotherme 15 peut donc servir de moyen de transfert thermique vers l'extérieur ou vers l'habitacle.

Avantageusement, l'évaporateur 4 a une capacité d'échange thermique adaptée pour satisfaire les besoins frigorifiques de l'habitacle dans la situation en fonctionnement stabilisé, en été. On a recours à l'évaporateur 3 et à l'aérotherme 15 dans les seules situations où les besoins frigorifiques de l'habitacle sont élevés et temporaires, par exemple dans la situation de démarrage l'été (figure 1), lorsqu'il est nécessaire de « déchambrer » l'habitacle, c'est-à-dire de renouveler rapidement l'air qu'il contient.

Dans ces situations, l'utilisation de l'énergie frigorifique stockée dans le système de stockage 65 permet avantageusement d'augmenter encore la quantité d'énergie frigorifique délivrée à l'habitacle.

L'agencement de l'évaporateur 4 et de l'aérotherme 15 dans le système représenté sur la figure 5 confère ainsi une grande souplesse pour leur utilisation, avantageuse pour optimiser la consommation énergétique du compresseur 9 et la taille des échangeurs.

Dans la configuration représentée sur la figure 2, l'évaporateur 3 est inactif et le fluide caloporteur ne reçoit sensiblement aucune énergie frigorifique en le traversant. Le refroidissement des échangeurs 17 et 18 est ainsi assuré au seul moyen des frigories de l'air extérieur transférées au fluide caloporteur à travers l'aérotherme 15. Le compresseur 9 ne fonctionne que pour produire l'énergie frigorifique de refroidissement de l'habitacle, ce qui limite sa consommation énergétique.

Si la température des échangeurs 17 et 18 augmente excessivement (situation non représentée), ou si la température maximale de la pile est atteinte, la vanne 7 peut être ouverte de manière à activer l'évaporateur 3. On peut également recourir à l'énergie frigorifique stockée dans le système de stockage 65.

On peut enfin utiliser l'évaporateur 3 et i'aérotherme 15 simultanément pour refroidir le fluide caloporteur dans le cas où l'aérotherme 15 ne suffit pas à lui seul.

Le deuxième sous-circuit C2' est destiné au refroidissement de la pile. Dans le sous-circuit C2', le fluide caloporteur, mis en circulation en boucle fermée par la pompe 38, traverse l'échangeur de pile 12, puis est refroidi à travers le radiateur 21.

La vanne 23 peut être ouverte pour que l'échangeur 13 évacue des calories pour régénérer le déshumidificateur d'air. Avantageusement, l'échangeur 13 sert donc simultanément de moyen d'évacuation des calories libérées par la pile et de moyen de régénération du déshumidificateur.

Le troisième sous-circuit C3' est destiné à l'évacuation, vers l'extérieur du véhicule V et par l'intermédiaire du radiateur 20, des calories libérées par la condensation du fluide frigorigène dans le condenseur 2 et transférées au fluide caloporteur dans ce condenseur 2. Le sous-circuit C3' fonctionne comme le sous-circuit de refroidissement du condenseur 2 précédemment décrit.

Dans cette configuration, le circuit secondaire comporte ainsi trois sous-circuits C1', C2' et C3', indépendants et correspondant aux circuits de refroidissement des batteries et du groupe de composants électroniques, de la pile, et du condenseur 2, respectivement.

Si la température de la pile augmente en dépit de l'évacuation de calories à travers le régénérateur de déshumidificateur 13 et le radiateur 21 (situation non représentée), la position des vannes 43 et 47 est modifiée de manière qu'une fraction du fluide caloporteur provenant de l'échangeur de pile 12 soit détournée dans la branche 35 et refroidie à travers le radiateur 20.

Si la puissance de la pile à combustible génère une quantité d'énergie calorifique trop élevée pour que les radiateurs 20 et 21 et le régénérateur de déshumidificateur 13 ne suffisent à l'évacuer, la pompe 58 est arrêtée et les trois voies des vannes 40 et 41 sont ouvertes. Le fluide caloporteur sortant de l'échangeur de pile 12 est alors en partie refroidi à travers le régénérateur de déshumidificateur 13, en partie refroidi à travers les radiateurs 20 et 21, en partie refroidi à travers l'aérotherme 15, et en partie détourné vers la branche 56 de manière à refroidir l'ensemble 69 de refroidissement des batteries et du groupe de composants électroniques.

Si, dans cette configuration, la température de la pile est toujours trop élevée, la vanne 39 est ouverte (situation non représentée), autorisant ainsi la traversée de l'échangeur 14 par le fluide caloporteur en provenance de l'échangeur de pile 12. L'air frais sortant de l'habitacle vers l'extérieur et traversant l'échangeur 14 refroidit ainsi le fluide caloporteur avant qu'il ne retourne refroidir la pile à combustible.

Une partie des frigories transférée dans l'habitacle par l'intermédiaire de l'évaporateur 4 est donc utilisée pour refroidir la pile. Cette caractéristique est particulièrement avantageuse, ces frigories étant sinon rejetées vers l'extérieur et perdues.

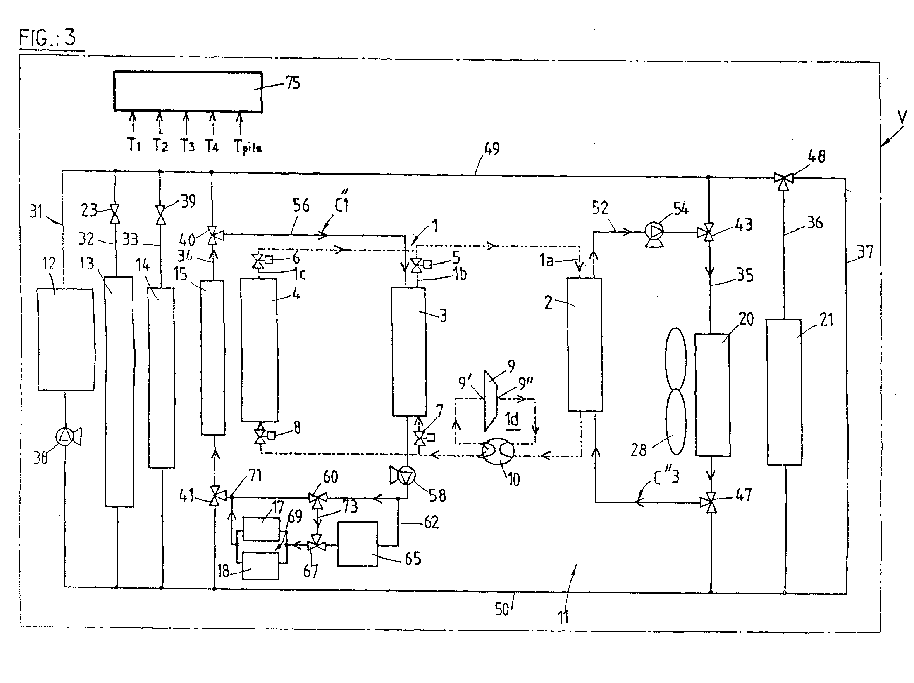

Dans la situation de démarrage à froid, en hiver, l'habitacle a besoin de chauffage et la pile, les batteries et les composants électroniques ont éventuellement besoin d'être réchauffés. La figure 3 illustre la situation où la pile a besoin d'être réchauffée, à la différence des batteries et des composants électroniques.

Le compresseur 9 est en marche, mais la position de la vanne à quatre voies 10 est inversée, de manière que le circuit primaire 1 fonctionne en pompe à chaleur, libérant de l'énergie calorifique par condensation du fluide frigorigène dans les évaporateurs 3 et 4, et de l'énergie frigorifique par évaporation du fluide frigorigène dans le condenseur 2.

L'habitacle est réchauffé par les calories produites dans le seul évaporateur 4, le volet 102 étant positionné de manière à autoriser la circulation d'air de la conduite 101 vers l'évaporateur 4.

La pompe 58 n'est mise en route qu'en cas de besoin de chauffage de l'ensemble 69. Le fluide caloporteur circule alors dans un sous-circuit C1" identique au sous-circuit C1', mais dans lequel la traversée de l'évaporateur 3 fournit de l'énergie calorifique au fluide caloporteur. De préférence, pour limiter les pertes d'énergie calorifique, le volet 102 ferme l'accès à l'aérotherme 15. Cependant, en ouvrant, au moins partiellement, le volet 102 et en positionnant le volet 104 de manière à fermer la conduite 106 vers l'extérieur, une partie de l'énergie calorifique transportée par le fluide caloporteur peut être transférée à l'habitacle, en complément de l'énergie calorifique fournie par l'évaporateur 4, mais au détriment du chauffage de l'ensemble 69.

En cas de besoin de chauffage de la pile (situation non représentée), les vannes 40 et 41 peuvent être positionnées de manière qu'au moins une partie du fluide caloporteur en provenance de l'évaporateur 3 traverse l'échangeur de pile 12.

Les vannes 23 et 39 sont alors fermées et les vannes 43, 47 et 48 positionnées de manière à éviter toute circulation du fluide caloporteur dans les branches 49 et 50.

Même quand la pile n'a pas besoin d'être chauffée, si l'échangeur de pile 12 est confondu avec la pile, une circulation de fluide caloporteur en boucle à travers les branches 31, 49, 37 et 50 peut avantageusement être établie pour homogénéiser la température de la pile et/ou fournir le débit nécessaire à l'humidification de la pile.

L'énergie frigorifique transférée au fluide caloporteur dans le condenseur 2 est évacuée vers l'extérieur par l'intermédiaire du radiateur 20, le fluide caloporteur circulant dans un sous-circuit indépendant C3" identique au sous-circuit C3'.

Dans la situation représentée sur la figure 3, le circuit secondaire comporte deux sous-circuits indépendants, de chauffage de l'ensemble 69, voire de l'habitacle, et d'évacuation de frigories par le radiateur 20, respectivement C1" et C3".

Quand la pile est suffisamment chaude (situation non représentée), la pompe 54 est arrêtée et les vannes 43 et 47 sont positionnées de manière qu'au moins une partie du fluide caloporteur en provenance de l'échangeur de pile 12 traverse le condenseur 2. L'évaporation du fluide frigorigène dans le condenseur 2 est favorisée par une température élevée du fluide caloporteur le traversant. Avantageusement, la température élevée du fluide caloporteur provenant de l'échangeur de pile 12 améliore donc l'efficacité du circuit primaire 1.

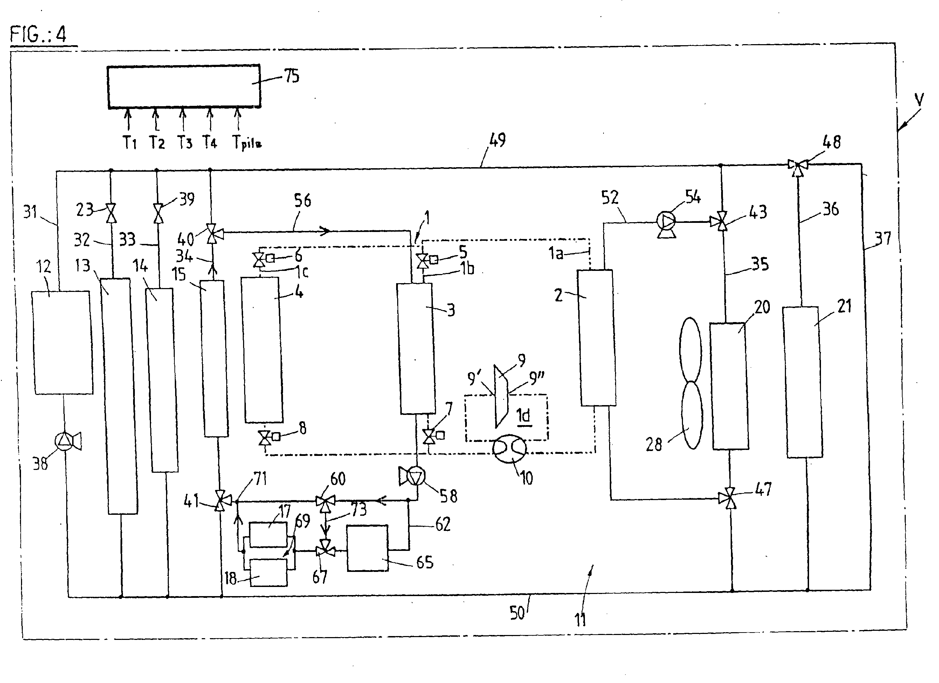

Dans la situation de fonctionnement stabilisé, en hiver (figure 4), l'énergie calorifique produite par les batteries et les composants électroniques est transférée, par l'intermédiaire de l'aérotherme 15 vers l'extérieur et/ou vers l'habitacle, selon la position du volet 104, le volet 102 autorisant l'air circulant dans la conduite 101 à traverser l'aérotherme 15. La position du volet 104 est déterminée en fonction des besoins calorifiques de l'habitacle.

Si cette énergie calorifique est insuffisante pour chauffer l'habitacle (situation non représentée), les vannes 40 et 41 sont positionnées de manière que du fluide caloporteur en provenance de l'échangeur de pile 12 traverse l'aérotherme 15.

Avantageusement, le compresseur 9 est à l'arrêt, ce qui permet une économie d'énergie.

Si la température de la pile augmente en dépit de l'évacuation de calories à travers l'aérotherme 15, les capacités d'évacuation du dispositif seront augmentées comme dans la situation de fonctionnement stabilisé en été (figure 2).

Dans toutes les situations correspondant aux configurations représentées sur les figures 1 à 4, le système de stockage de froid 65 fournit ou reçoit de l'énergie frigorifique du fluide caloporteur selon les besoins des échangeurs du circuit secondaire.

Un capteur de température permet de mesurer la température du fluide caloporteur stocké dans le système de stockage de froid 65, et d'évaluer ainsi la quantité d'énergie frigorifique encore en stock.

La recharge du système 65 se fait lorsque les besoins en énergie frigorifique sont faibles. Le circuit primaire 1 fonctionne alors en climatiseur, la pompe 58 est mise en marche et la vanne à trois voies 60 positionnée de manière que le fluide caloporteur refroidi par l'évaporateur 3 traverse le système de stockage 65.

Comme cela apparaît clairement à présent, le dispositif selon l'invention permet la régulation thermique d'un ou plusieurs échangeurs, et notamment la sélection de la production d'énergie calorifique ou d'énergie frigorifique dans ce ou ces échangeurs, non seulement par action sur les moyens de connexion sélective insérés dans le circuit secondaire, mais aussi par inversion des rôles du condenseur 2 et de l'évaporateur 3.

Par exemple pour inverser la fonction des échangeurs 2, 3, 4, 15, 17, 18 et 20 dans la configuration de fonctionnement stabilisé en été représentée sur la figure 2, il suffit d'inverser la position de la vanne à quatre voies 10.

Pour inverser la fonction d'un grand nombre d'échangeurs du circuit secondaire, il est ainsi très rapide d'inverser la position de la vanne à quatre voies 10 et de rétablir dans leur fonction initiale, par manipulation de vannes du circuit secondaire 11, les quelques échangeurs dont la fonction ne doit pas être inversée. Bien entendu, l'architecture du circuit secondaire devra alors nécessairement relier ces derniers échangeurs à la fois au condenseur 2 et à un des évaporateurs 3 et 4.

Avantageusement, l'architecture du circuit secondaire offre une grande souplesse pour la gestion thermique des échangeurs du circuit secondaire.

En comparaison avec le dispositif décrit dans la demande de brevet FR 0 111 603, le dispositif selon l'invention permet encore, avantageusement, d'insérer dans le circuit primaire 1, un échangeur, en l'occurrence l'évaporateur 4, pouvant servir sélectivement au chauffage ou au refroidissement de l'habitacle. Le chauffage ou le refroidissement de l'habitacle se fait dès la condensation ou l'évaporation, respectivement, du fluide frigorigène dans cet échangeur, sans que l'énergie calorifique ou frigorifique ait à transiter par un fluide caloporteur d'un circuit secondaire. Le rendement énergétique est également amélioré.

Bien entendu, la présente invention n'est pas limitée au mode de réalisation décrit et représenté, fourni à titre d'exemple illustratif et non limitatif.

En particulier, le fonctionnement du dispositif selon l'invention n'est pas limité aux situations représentées sur les figures 1 à 4.

En outre, les différents échangeurs du circuit secondaire peuvent être en relation d'échange thermique avec des organes quelconques, en particulier différents de ceux décrits, avec l'habitacle du véhicule ou avec l'extérieur du véhicule. Par exemple, un échangeur tel que l'échangeur 20 ou l'échangeur 12 peut être en relation d'échange thermique avec la pile, l'extérieur, l'habitacle, les batteries, les composants électroniques ou d'autres organes du véhicule.

L'invention concerne donc un dispositif de gestion thermique d'un ou plusieurs échangeurs agencés selon une architecture telle que représentée sur les figures 1 à 4, ou équivalente, indépendamment de la destination de l'énergie calorifique ou frigorifique transférée par ce ou ces échangeurs.

## Revendications

1. Dispositif de gestion thermique d'une pluralité d'échangeurs thermiques (12,13,14,15,20,21), notamment pour un véhicule automobile (V) équipé d'une pile à combustible, comportant
- un circuit primaire frigorigène (1) dans lequel est amené à circuler un fluide frigorigène et dans lequel sont insérés en série au moins un compresseur (9), un condenseur (2), un détendeur (5), et un premier évaporateur (3),
- un circuit secondaire (11) dans lequel est amené à circuler un fluide caloporteur et comportant
a) des première (34), deuxième (52) et troisième (56) branches parallèles dans lesquelles sont insérés un premier (15) parmi lesdits échangeurs, ledit condenseur (2) et ledit évaporateur (3), respectivement,
b) des moyens de connexion sélective (40,41,43,47) de ladite première branche (34) avec ladite deuxième branche (52) ou ladite troisième branche (56),
c) des moyens de mise en circulation (54,58) dudit fluide caloporteur, et
d) des moyens de commande (75) dudit compresseur (9), desdits moyens de connexion sélective (40,41,43,47) et desdits moyens de mise en circulation (54,58),
**caractérisé en ce que** ledit circuit primaire (1) comporte en outre des moyens d'inversion (10) du sens du circulation dudit fluide primaire dans lesdits condenseur (2) et évaporateur (3), de manière à sélectivement condenser et évaporer, ou évaporer et condenser, ledit fluide primaire dans lesdits condenseur (2) et évaporateur (3), respectivement.

2. Dispositif de gestion thermique selon la revendication 1, **caractérisé en ce que** ledit circuit secondaire (11) comporte au moins une quatrième branche (35) parallèle aux dites première (34), deuxième (52) et troisième (56) branches et dans laquelle est inséré au moins un deuxième (20) parmi lesdits échangeurs et des moyens de connexion (40,41,43,47) de ladite quatrième branche (35) avec l'une (52) desdites deuxième (52) et troisième (56) branches quand ladite première branche (34) est connectée avec l'autre (56) desdites deuxième (52) et troisième (56) branches, de manière à constituer des premier (C1') et deuxième (C3') sous-circuits indépendants, et des moyens de mise en circulation (54,58) dudit fluide caloporteur dans lesdits sous-circuits (C1',C3').

3. Dispositif de gestion thermique selon la revendication 2, **caractérisé en ce que** ledit circuit secondaire (11) comporte au moins des cinquième (31) et sixième (36) branches, dans lesquelles sont insérés des troisième (12) et quatrième (21) parmi lesdits échangeurs, respectivement, ledit circuit secondaire (11) comportant en outre
- des moyens de connexion sélective (40,41,43,47) de ladite cinquième branche (31) avec l'une quelconque desdites deuxième (52) et troisième (56) branches, de manière à sélectivement insérer ledit troisième échangeur (12) dans l'un desdits premier (C1') et deuxième (C3') sous-circuits,
- des moyens de connexion sélective (40,41,43,47,48) de ladite sixième (36) branche avec l'une quelconque desdites deuxième (52) et troisième (56) branches, de manière à sélectivement insérer ledit quatrième échangeur (21) dans l'un desdits premier (C1') et deuxième (C3') sous-circuits,
- des moyens de connexion sélective (40,41,43,47,48) de ladite cinquième branche (31) avec ladite sixième branche (36), de manière à constituer un troisième sous-circuit (C2') indépendant desdits premier (C1') et deuxième (C3') sous-circuits, et
- des moyens de mise en circulation dudit fluide caloporteur dans lesdits sous-circuits (38,54,58).

4. Dispositif de gestion thermique selon la revendication 3, **caractérisé en ce que** ledit circuit secondaire (11) comporte des moyens de connexion (40,41,43,47) destinés à relier simultanément ladite cinquième branche (31), ladite sixième branche (36), et au moins l'une desdites deuxième (52) et troisième (56) branches.

5. Dispositif de gestion thermique selon l'une quelconque des revendications 3 et 4, **caractérisé en ce que** ledit circuit secondaire (11) comporte au moins une septième branche de dérivation (37) dudit quatrième échangeur (21) et des moyens de réglage du débit (48) dudit fluide caloporteur dans ladite branche de dérivation (37).

6. Dispositif de gestion thermique selon l'une quelconque des revendications précédentes, **caractérisé en ce que** ledit circuit primaire (1) comporte un deuxième évaporateur (4) en relation d'échange thermique avec un habitacle dudit véhicule (V).

7. Dispositif de gestion thermique selon la revendication 6, **caractérisé en ce que** ledit deuxième évaporateur (4) est branché en parallèle avec ledit premier évaporateur (3).

8. Dispositif de gestion thermique selon l'une quelconque des revendications 6 et 7, **caractérisé en ce que** ledit deuxième évaporateur (4) et au moins un (15) parmi lesdits échangeurs dudit circuit secondaire (11), destinés au chauffage et à la climatisation dudit habitacle, sont insérés dans un système comportant une conduite (101) d'amenée d'air audit deuxième évaporateur (4) et audit échangeur (15), un premier volet (102) disposé dans la trajectoire dudit air et dont la position détermine les fractions dudit air dirigées vers ledit deuxième évaporateur (4) et vers ledit échangeur (15), et un deuxième volet (104) disposé dans la trajectoire de l'air ayant traversé ledit échangeur (15) et dont la position détermine les fractions dudit air évacuées vers l'extérieur et vers ledit habitacle.

9. Dispositif de gestion thermique selon l'une quelconque des revendications précédentes, **caractérisé en ce que** l'un desdits échangeurs est un aérotherme (15) traversé par de l'air destiné à circuler dans un habitacle dudit véhicule M, ou est un radiateur (20,21) en relation d'échange thermique avec l'extérieur dudit véhicule (V), ou est en relation d'échange thermique avec ladite pile à combustible, ou est en relation d'échange thermique avec au moins une batterie dudit véhicule (V), ou est en relation d'échange thermique avec un groupe de composants électroniques dudit véhicule (V), ou est en relation d'échange thermique avec un déshumidificateur.

10. Dispositif de gestion thermique selon l'une quelconque des revendications précédentes, **caractérisé en ce qu**'un système de stockage de froid (65) est inséré dans ledit circuit secondaire (11), ledit circuit secondaire (11) comportant en outre des moyens (56,60,57) de dériver ledit fluide caloporteur dudit système de stockage de froid (65) et des moyens de régulation (60,67) du débit dudit fluide caloporteur dans ledit système de stockage de froid (65).

## Claims

1. Device for thermal management of a plurality of heat exchangers (12, 13, 14, 15, 20, 21), in particular for a motor vehicle (V) equipped with a fuel cell, comprising
- a refrigerating primary circuit (1) in which a refrigerant fluid is circulated and in which at least one compressor (9), one condenser (2), one expansion valve (5), and a first evaporator (3) are inserted in series,
- a secondary circuit (11) in which a heat transfer fluid is circulated and comprising
a) first (34), second (52) and third (56) parallel branches in which are inserted a first (15) from the said heat exchangers, the said condenser (2) and the said evaporator (3), respectively,
b) means (40, 41, 43, 47) for selectively connecting the said first branch (34) with the said second branch (52) or the said third branch (56),
c) means (54, 58) for circulating the said heat transfer fluid, and
d) means (75) for controlling the said compressor (9), the said selective connecting means (40, 41, 43, 47) and the said circulating means (54, 58),
**characterized in that** the said primary circuit (1) further comprises means (10) for reversing the flow direction of the said primary fluid in the said condenser (2) and evaporator (3), in order to selectively condense and evaporate, or evaporate and condense, the said primary fluid in the said condenser (2) and evaporator (3), respectively.

2. Thermal management device according to Claim 1, **characterized in that** the said secondary circuit (11) comprises at least one fourth branch (35) parallel to the said first (34), second (52) and third (56) branches and in which is inserted at least one second (20) from the said heat exchangers and means (40, 41, 43, 47) for connecting the said fourth branch (35) with one (52) of the said second (52) and third (56) branches when the said first branch (34) is connected with the other (56) of the said second (52) and third (56) branches, in order to constitute first (C1') and second (C3') independent sub-circuits, and means (54, 58) for circulating the said heat transfer fluid in the said sub-circuits (C1', C3').

3. Thermal management device according to Claim 2, **characterized in that** the said secondary circuit (11) comprises at least fifth (31) and sixth (36) branches, in which are inserted third (12) and fourth (21) from the said heat exchangers, respectively, the said secondary circuit (11) further comprising
- means (40, 41, 43, 47) for selectively connecting the said fifth branch (31) with either of the said second (52) and third (56) branches, in order to selectively insert the said third heat exchanger (12) into one of the said first (C1') and second (C3') sub-circuits,
- means (40, 41, 43, 47, 48) for selectively connecting the said sixth (36) branch with either of the said second (52) and third (56) branches, in order to selectively insert the said fourth heat exchanger (21) into one of the said first (C1') and second (C3') sub-circuits,
- means (40, 41, 43, 47, 48) for selectively connecting the said fifth branch (31) with the said sixth branch (36), in order to constitute a third sub-circuit (C2') independent of the said first (C1') and second (C3') sub-circuits, and
- means for circulating the said heat transfer fluid in the said sub-circuits (38, 54, 58).

4. Thermal management device according to Claim 3, **characterized in that** the said secondary circuit (11) comprises connecting means (40, 41, 43, 47) suitable for simultaneously connecting the said fifth branch (31), the said sixth branch (36), and at least one of the said second (52) and third (56) branches.

5. Thermal management device according to either of Claims 3 and 4, **characterized in that** the said secondary circuit (11) comprises at least one seventh branch (37) for bypassing the said fourth heat exchanger (21) and means (48) for adjusting the flow rate of the said heat transfer fluid in the said bypass branch (37).

6. Thermal management device according to any one of the preceding claims, **characterized in that** the said primary circuit (1) comprises a second evaporator (4) in a heat exchange relation with a passenger compartment of the said vehicle (V).

7. Thermal management device according to Claim 6, **characterized in that** the said second evaporator (4) is connected in parallel with the said first evaporator (3).

8. Thermal management device according to either of Claims 6 and 7, **characterized in that** the said second evaporator (4) and at least one (15) from the said heat exchangers of the said secondary circuit (11), suitable for heating and air-conditioning the said passenger compartment, are inserted into a system comprising a line (101) for conveying air to the said second evaporator (4) and to the second heat exchanger (15), a first flap (102) placed in the trajectory of the said air and whereof the position determines the fractions of the said air sent to the said second evaporator (4) and to the said heat exchanger (15), and a second flap (104) placed in the trajectory of the air having passed through the said heat exchanger (15) and whereof the position determines the fractions of the said air discharged to the exterior and to the said passenger compartment.

9. Thermal management device according to any one of the preceding claims, **characterized in that** one of the said heat exchangers is a unit heater (15) traversed by the air intended to circulate in a passenger compartment of the said vehicle (V), or is a radiator (20, 21) in a heat exchange relation with the exterior of the said vehicle (V), or is in a heat exchange relation with the said fuel cell, or is in a heat exchange relation with at least one battery of the said vehicle (V), or is in a heat exchange relation with a group of electronic components of the said vehicle (V), or is in a heat exchange relation with a dehumidifier.

10. Thermal management device according to any one of the preceding claims, **characterized in that** a cold storage system (65) is inserted into the said secondary circuit (11), the said secondary circuit (11) further comprising means (56, 60, 57) for diverting the said heat transfer fluid from the said cold storage system (65) and means (60, 67) for regulating the flow rate of the said heat transfer fluid in the said cold storage system (65).

## Patentansprüche

1. Wärmesteuervorrichtung für mehrere Wärmetauscher (12, 13, 14, 15, 20, 21), insbesondere für ein mit einer Brennstoffzelle ausgerüstetes Kraftfahrzeug (V), mit
- einem Primärkältemittelkreis (1), in dem ein Kältemittel zirkuliert und in den in Reihe wenigstens ein Kompressor (9), ein Kondensator (2), ein Entspanner (5) und ein Verdampfer (3) eingefügt sind, und
- einem Sekundärkreis (11), in dem ein Wärmefluid zirkuliert und der enthält:
a) einen ersten (34), einen zweiten (52) und einen dritten (56) parallelen Zweig, in denen ein erster (15) der Tauscher, der Kondensator (2) bzw. der Verdampfer (3) eingefügt sind,
b) Mittel (40, 41, 43, 47) zum wahlweisen Verbinden des ersten Zweigs (34) mit dem zweiten Zweig (52) oder mit dem dritten Zweig (56),
c) Mittel (54, 58) zum Zirkulierenlassen des Wärmefluids und
d) Mittel (75) zum Steuern des Kompressors (9), der Mittel (40, 41, 43, 47) zum wahlweisen Verbinden und der Zirkulationsmittel (54, 58),
**dadurch gekennzeichnet, dass** der Primärkreis (1) außerdem Mittel (10) zum Umkehren der Zirkulationsrichtung des primären Fluids in dem Kondensator (2) und dem Verdampfer (3) enthält, derart, dass das primäre Fluid in dem Kondensator (2) bzw. in dem Verdampfer (3) wahlweise kondensiert bzw. verdampft oder aber verdampft bzw. kondensiert.

2. Wärmesteuervorrichtung nach Anspruch 1, **dadurch gekennzeichnet, dass** der Sekundärkreis (11) wenigstens einen vierten Zweig (35), der zu dem ersten Zweig (34), dem zweiten Zweig (52) und dem dritten Zweig (56) parallel ist und in den wenigstens ein zweiter (20) der Tauscher und Mittel (40, 41, 43, 47) für die Verbindung des vierten Zweigs (35) mit einem (52) des zweiten Zweigs (52) und des dritten Zweigs (56), wenn der erste Zweig (34) mit dem anderen (56) des zweiten Zweigs (52) und des dritten Zweigs (56) verbunden ist, eingefügt sind, derart, dass ein erster (C1') und ein zweiter (C3') Unterkreis, die voneinander unabhängig sind, gebildet werden, und Mittel (54, 58) zum Zirkulierenlassen des Wärmefluids in den Unterkreisen (C1', C3') enthält.

3. Wärmesteuervorrichtung nach Anspruch 2, **dadurch gekennzeichnet, dass** der Sekundärkreis (11) wenigstens einen fünften Zweig (31) und einen sechsten Zweig (36) enthält, in die ein dritter (12) bzw. ein vierter (21) der Tauscher eingefügt sind, wobei der Sekundärkreis (11) außerdem enthält:
- Mittel (40, 41, 43, 47) zum wahlweisen Verbinden des fünften Zweigs (31) mit dem zweiten Zweig (52) oder mit dem dritten Zweig (56), derart, dass der dritte Tauscher (12) wahlweise in den ersten Unterkreis (C1') oder in den zweiten Unterkreis (C3') eingefügt wird,
- Mittel (40, 41, 43, 47, 48) zum wahlweisen Verbinden des sechsten Zweigs (36) mit dem zweiten Zweig (52) oder mit dem dritten Zweig (56), derart, dass der vierte Tauscher (21) wahlweise in den ersten Unterkreis (C1') oder in den zweiten Unterkreis (C3') eingefügt wird,
- Mittel (40, 41, 43, 47, 48) zum wahlweisen Verbinden des fünften Zweigs (31) mit dem sechsten Zweig (36), derart, dass ein dritter Unterkreis (C2') gebildet wird, der von dem ersten Unterkreis (C1') und von dem zweiten Unterkreis (C3') unabhängig ist, und
- Mittel zum Zirkulierenlassen des Wärmefluids in den Unterkreisen (38, 54, 58).

4. Wärmesteuervorrichtung nach Anspruch 3, **dadurch gekennzeichnet, dass** der Sekundärkreis (11) Verbindungsmittel (40, 41, 43, 47) enthält, die dazu bestimmt sind, den fünften Zweig (31), den sechsten Zweig (36) und wenigstens einen des zweiten Zweigs (52) und des dritten Zweigs (56) gleichzeitig zu verbinden.

5. Wärmesteuervorrichtung nach einem der Ansprüche 3 und 4, **dadurch gekennzeichnet, dass** der Sekundärkreis (11) wenigstens einen siebten Ableitungszweig (37) des vierten Tauschers (21) und Mittel (48) zum Einstellen des Wärmefluiddurchsatzes in dem Ableitungszweig (37) enthält.

6. Wärmesteuervorrichtung nach einem der vorhergehenden Ansprüche, **dadurch gekennzeichnet, dass** der Primärkreis (1) einen zweiten Verdampfer (4) enthält, der in einer Wärmeaustauschbeziehung mit dem Fahrgastraum des Fahrzeugs (V) steht.

7. Wärmesteuervorrichtung nach Anspruch 6, **dadurch gekennzeichnet, dass** der zweite Verdampfer (4) zu dem ersten Verdampfer (3) parallel geschaltet ist.

8. Wärmesteuervorrichtung nach einem der Ansprüche 6 und 7, **dadurch gekennzeichnet, dass** der zweite Verdampfer (4) und wenigstens einer (15) der Tauscher des Sekundärkreises (11), die für die Heizung und Klimatisierung des Fahrgastraums bestimmt sind, in ein System eingefügt sind, das eine Leitung (101) für die Zuführung von Luft zu dem zweiten Verdampfer (4) und zu dem Tauscher (15), eine erste Klappe (102), die in dem Weg der Luft angeordnet ist und deren Stellung die Anteile der Luft, die zu dem zweiten Verdampfer (4) und zu dem Tauscher (15) geleitet werden, bestimmt, und eine zweite Klappe (104), die in dem Weg der durch den Tauscher (15) gegangenen Luft angeordnet ist und deren Position die Anteile der Luft, die in die äußere Umgebung und in den Fahrgastraum abgeführt werden, bestimmt, enthält.

9. Wärmesteuervorrichtung nach einem der vorhergehenden Ansprüche, **dadurch gekennzeichnet, dass** einer der Tauscher ein Luftheizgerät (15) ist, durch das die Luft strömt, die dazu bestimmt ist, in einem Fahrgastraum des Fahrzeugs (V) zu zirkulieren, oder ein Kühler (20, 21) ist, der mit dem Wärmeaustausch mit der äußeren Umgebung des Fahrzeugs (V) in Beziehung steht oder mit dem Wärmeaustausch mit der Brennstoffzelle in Beziehung steht oder mit dem Wärmeaustausch mit wenigstens einer Batterie des Fahrzeugs (V) in Beziehung steht oder mit dem Wärmeaustausch mit einer Gruppe elektronischer Komponenten des Fahrzeugs (V) in Beziehung steht oder mit dem Wärmeaustausch mit einem Entfeuchter in Beziehung steht.

10. Wärmesteuervorrichtung nach einem der vorhergehenden Ansprüche, **dadurch gekennzeichnet, dass** ein Kältespeichersystem (65) in den Sekundärkreis (11) eingefügt ist, wobei der Sekundärkreis (11) außerdem Mittel (56, 60, 57) zum Ableiten des Wärmefluids des Kältespeichersystems (65) und Mittel (60, 67) zum Regulieren des Wärmefluiddurchsatzes in dem Kältespeichersystem (65) enthält.
